# EUROPEAN PATENT APPLICATION

(11) **EP 4 489 033 A1**
(43) Date of publication of application: **08.01.2025**
(21) Application number: 23183737.8
(22) Date of filing: 05.07.2023
(51) Int. Cl.: H01B 1/24

(54) **ELECTRICALLY CONDUCTIVE CURABLE SILICONE COMPOSITION**

(71) Applicant: Henkel AG & Co. KGaA, 40589 Düsseldorf (DE)
(72) Inventor: Patel, Mihirkumar, 411057 Pune (IN); Shah, Jayesh P, 411001 Pune (IN); Jadhav, Sumit, 425405 Dhule (IN); Bahrami, Kourosh, 40547 Düsseldorf (DE)

(57) **Abstract**

The invention relates to an electrically conductive curable silicone composition, a cured product of the composition, adhesive, sealant, coating, and/or ink materials comprising the composition, and the use of the composition.

## Description

### Technical Field

The invention relates to an electrically conductive curable silicone composition, a cured product of the composition, adhesive, sealant, coating, and/or ink materials comprising the composition, and the use of the composition.

### Technological Background

Printed electronics have been evolving rapidly with growing demands across many markets like photovoltaics, healthcare, smart clothing and wearables, automotive electronics applications like EV powertrains, interior sensors and exterior heating and displays to name a few. With explosion in Internet of Things (IOT) in the last several years, printed electronics base sensors are of high interest due to their conformity-form factor, lower cost, lower battery consumption etc. in heavy industrial segments for predictive maintenance of equipment and critical assets.

Heavy industry like oil and gas, power, cement or steel faces harsh environment of high processing temperature and chemicals which pose challenges for traditional printed flexible electronics. Although the flexible substrates used for printed electronics like Polyimide or PEEK may be suitable to withstand harsh condition, the circuit assembly materials like conductive inks and dielectric inks and adhesives are not suitable for prolonged exposure at high temperature of 200°C or above. Traditional conductive inks and adhesives used for flex circuit fabrication are based on thermoplastic binder like polyurethane, polyvinyl acetate/ copolymer etc. for good adhesion to plastic substrates. Thermoset materials like epoxy etc. are used for inks and component attachment. They severely oxidize upon continuous temperature exposure above 200°C and lose adhesion in a very short time. Moreover, conventional conductive and resistive inks often contain flammable solvents to allow high loading of silver or carbon-based fillers for high conductivity and suitable rheology for printing. The flammable solvent requires special storage and handling and poses safety concerns of end-user.

Hence, there was a need for high temperature conducive and resistive materials and dielectric materials for long term heat stable printed flexible electronics.

### Summary of the invention

The present invention provides an electrically conductive curable silicone composition which has a good adhesion to variety of flexible substrates, flexibility, mechanical properties, processability, and electrical conductivity properties within a broad temperature range, for example from -40°C to 300°C. Especially, the composition provides an excellent stability even at a high temperature, for example up to 300°C.

In accordance with a first aspect, the invention relates to an electrically conductive curable silicone composition comprising:
(a) at least one polyorganosiloxane having at least one terminal group of the formula (I)

   -Si(R¹)ₖ(Y)₃₋ₖ (I),

   wherein
   each R' is independently selected from a hydrocarbon radical containing 1 to 20 C atoms; each Y is independently selected from a hydroxy group or a hydrolysable group; and
   k is 0, 1, or 2;
(b) at least one electrically conductive carbon nanostructure (CNS) or single walled carbon nanotube (SWCNT) in an amount of 0.01 to 2 % by weight based on the total weight of the composition;
(c) at least one non-conductive filler;
(d) at least one curing catalyst; and
(e) optionally, at least one crosslinker.

Basically, siloxane-based compositions are electrically nonconductive but those could be made electrically conductive by blending with different conductive additives with varied loadings. According to the present invention, carbon nanostructure(s) (CNS) or single walled carbon nanotube(s) (SWCNT) are dispersed at relatively low volume loading and derived the reactive silicone composition, which upon curing offers unique advantages like improved rheology, better conductivity at low loading, improved adhesion, and high temperature stability. In addition, the derived composition is a solventless system.

The present invention also relates to adhesive, sealant, and/or coating materials comprising the electrically conductive curable composition as defined herein.

In another aspect, the present invention relates to the use of the electrically conductive curable composition as defined herein as an adhesive, a sealant, and/or a coating material.

The term "curable composition" is understood to be a substance or mixture of multiple substances, which is curable by physical or chemical measures. In this regard, these chemical or physical measures can be, for example, the supplying of energy in the form of heat, light, or other electromagnetic radiation, but also simply bringing into contact with atmospheric moisture, water, or a reactive component. The composition thereby changes from an original state to a state that has a higher hardness. In preferred embodiments, the curable composition of the present invention is a moisture curable composition.

As used herein, the singular forms "a", "*an*" and "*the*" include plural referents unless the context clearly dictates otherwise.

The term "*at least one*," as used herein, means 1 or more, i.e., 1, 2, 3, 4, 5, 6, 7, 8, 9, or more. With reference to an ingredient, the indication refers to the type of ingredient and not to the absolute number of molecules. "*At least one polymer*" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "*comprising*"*,* "*comprises*" and "*comprised* of" as used herein are synonymous with "*including*"*,* "*includes*"*,* "*containing*" or "*contains*"*,* and are inclusive or open-ended and do not exclude additional, non-recited members, elements or method steps. If used, the phrase "*consisting of*" is closed and excludes all additional elements. Further, the phrase "*consisting essentially of*" excludes additional material elements but allows the inclusion of non-material elements that do not substantially change the nature of the invention.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "*about*"*,* as used herein in connection with a numerical value, relates to a variance of ±20%, preferably ±10% of the respective value.

The words "*preferred*"*,* "*preferably*"*,* "*desirably*" and "*particularly*"*,* and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "*may*" is used in a permissive sense - that is meaning to have the potential to - rather than in the mandatory sense.

As used herein, room temperature is 23°C plus or minus 2°C. As used herein, "*ambient conditions*" means the temperature and pressure of the surroundings in which the composition is located or in which a coating layer or the substrate of said coating layer is located.

The electrically conductive curable silicone composition according to the present invention comprises (a) at least one polyorganosiloxane having at least one terminal group of the formula (I)

-Si(R¹)ₖ(Y)₃₋ₖ (I),

wherein
each R' is independently selected from a hydrocarbon radical containing 1 to 20 C atoms;
each Y is independently selected from a hydroxy group or a hydrolysable group; and k is 0, 1, or 2.

In preferred embodiments, the polyorganosiloxane (a) is a polydiorganosiloxane, more preferably a polydiorganosiloxane having at least one alkyl group and/or at least one aryl group. The alkyl group may be selected from a C₁-C₂₀ alkyl group, preferably a C₁-C₈ alkyl group, in particular is a methyl group. The aryl group may be selected from a C₆-C₁₈ aryl group, in particular is a phenyl group. In particularly preferred embodiments, the polyorganosilxoane (a) is a polydimethylsiloxane.

In preferred embodiments, each R' is independently selected from the group consisting of an alkyl group containing 1 to 20 C atoms, an aryl group containing 6 to 20 C atoms, and an aralkyl group containing 7 to 20 C atoms, preferably selected from alkyl group containing 1 to 20 C atoms, in particular 1 to 8 C atoms. Examples of R' include alkyl groups, such as a methyl group and an ethyl group, cycloalkyl groups, such as a cyclohexyl group, aryl groups, such as a phenyl group, and aralkyl groups, such as a benzyl group. In particularly preferred embodiments, R' is selected from a methyl or ethyl group.

In preferred embodiments, each Y is independently selected from a hydroxyl group, an oxime group, an alkoxy group, an acyloxy group, or an acetoxy group.

In certain embodiments, alkoxy groups, in particular methoxy and ethoxy groups, oxime groups, and acetoxy groups are particularly preferred. In particularly preferred embodiments, Y is selected from a methoxy or ethoxy group, more preferably is a methoxy group.

The term "oxime groups" as used herein includes ketoximes and aldoximes, and refers in general to groups which contain the functional group R'₂C=N-O-, wherein the oxygen atom is bound to the silicon atom, and R' may be H or another group, preferably an alkyl group.

In particularly preferred embodiments, the formula (I) is trimethoxysilyl group or dimethoxymethyl group.

In preferred embodiments, the polyorganosiloxane (a) is dialkoxyalkyl polydiorganosiloxane, more preferably dimethoxymethyl polydiorganosiloxane, in particular dimethoxymethyl polydimethylsiloxane.

In other preferred embodiments, the formula (I) is a hydroxyl group. In this case, the polyorganosiloxane (a) is preferably α,ω-dihydroxyi-terminated polydiorganosiloxanes, in particular α,ω-dihydroxyl-terminated polydimethylsiloxane.

The polyorganosiloxane (a) may have a kinematic viscosity of from 5,000 to 100,000 mPas, preferably from 8,000 to 65,000 mPas, more preferably from 8,000 to 50,000 mPas (Brookfield CAP 2000 viscometer, at 25°C and 50% RH, spindle 5, 20 rpm).

Mixtures comprising polyorganosiloxanes having different viscosities may also be used.

The quantity of the polyorganosiloxane (a) in the curable composition described herein may be from 50 to 95 wt. %, preferably 65 to 95 wt. %, more preferably 80 to 95 wt. %, based on the total weight of the composition.

The electrically conductive curable composition according to the present invention comprises (b) at least one electrically conductive carbon nanostructure (CNS) or single walled carbon nanotube (SWCNT) in an amount of 0.01 to 4 % by weight, preferably 0.05 to 2% by weight, more preferably 0.1 to 1.5 % by weight, based on the total weight of the composition.

The term "carbon nanostructure" or "CNS" refers to a plurality of carbon nanotubes (CNTs), multiwall (also known as multi-walled) carbon nanotubes (MWCNTs) in many cases, that can exist as a polymeric structure by being interdigitated, branched, crosslinked, and/or sharing common walls with one another. Thus, CNSs can be considered to have CNTs, such as, for instance, MWCNTs, as a base monomer unit of their polymeric structure. Typically, CNSs are grown on a substrate (e.g., a fiber material) under CNS growth conditions. In such cases, at least a portion of the CNTs in the CNSs can be aligned substantially parallel to one another, much like the parallel CNT alignment seen in conventional carbon nanotube forests.

Carbon nanotubes fundamentally fall into two classes: single-walled carbon nanotubes (SWCNTs) and multi-walled carbon nanotubes (MWCNTs). Despite the obvious commonality, SWCNTs and MWCNTs have significantly different physical properties from each other because of their structural differences. The most important feature that distinguishes SWCNTs is that the wall of the nanotube consists of the only one graphene layer. In other words, single-walled carbon nanotubes can be described as graphene sheets seamlessly rolled up to form hollow cylinders.

The electrically conductive carbon nanostructure (CNS) can be selected from the group consisting of: carbon nanostructures or fragments of carbon nanostructures including a plurality of multiwall carbon nanotubes that are crosslinked in a polymeric structure by being branched, interdigitated, entangled and/or sharing common walls;
fractured carbon nanotubes derived from the carbon nanostructures and branched and sharing common walls with one another;
elongated CNS strands derived from the carbon nanostructures and including CNTs that have been displaced linearly with respect to one another;
dispersed CNS comprising exfoliated fractured CNTs that do not share common walls with one another; and
combinations thereof.

In preferred embodiments, the carbon nanostructure (CNS) or single walled carbon nanotube (SWCNT) is dispersed within the polyorganosiloxane. The electrically conductive carbon nanostructure (CNS) or single walled carbon nanotube (SWCNT) can be dispersed within the polyorganosiloxane.

The electrically conductive curable composition comprises the at least one electrically conductive carbon nanostructure (CNS) or single walled carbon nanotube (SWCNT) in an amount of from 0.01 to 4 % by weight, preferably 0.05 to 2 % by weight, more preferably 0.1 to 1.5 % by weight, based on the total weight of the composition. Desired conductivity can be achieved with such a low content of the carbon nanostructure (CNS) or single walled carbon nanotube (SWCNT). Due to the low content of the carbon nanostructure (CNS) or single walled carbon nanotube (SWCNT), the composition can have a good adhesion and mechanical properties such as high flexibility, and a proper viscosity which leads to a good processability. Moreover, due to the relatively high content of the polyorganosiloxane, the composition can have a good temperature stability in both negative and positive zone of temperature.

In certain embodiments, the electrically conductive curable composition may further comprise at least one additional electrically conductive filler, which is different from the carbon nanostructure (CNS) or single walled carbon nanotube (SWCNT) (b), preferably selected from the group consisting of silver, carbon black, graphite, graphene, copper, silver-coated nickel, silver-coated copper, silver-coated graphite, silver-coated polymers, silver-coated aluminium, silver-coated glass, silver-coated carbon, silver-coated boron nitride, silver-coated aluminium oxide, silver-coated aluminium hydroxide, nickel-coated graphite, and, mixtures thereof, more preferably selected from carbon black, graphite, or graphene. The composition may comprise the at least one additional electrically conductive filler up to 9 wt.%, preferably from 0.1 to 7 wt.%, more preferably 0.1 to 3 wt.%.

Preferably, the sum of the electrically conductive carbon nanostructure (CNS) or single walled carbon nanotube (SWCNT) (b) and the additional electrically conductive filler is less than 10 wt.%, preferably less than 9 wt.%, more preferably less than 5 wt.%, in particular less than 4 wt.%. By blending the electrically conductive carbon nanostructure (CNS) or single walled carbon nanotube (SWCNT) with the additional electrically conductive filler within these ranges, more robust system with a denser conductive network within the crosslinked silicone matrix can be achieved.

The electrically conductive curable composition according to the present invention further comprises at least one non-conductive filler (c). The non-conductive filler particles obstruct the conductive pathway created by CNS or SWCNT and/or the blend of CNS or SWCNT with additional conductive filler(s) . The non-conductive filler (c) improves thermal resistance and stability of the composition at high temperature. Also they help to improvise the mechanical and/or rheological properties.

In preferred embodiments, the non-conductive filler is a metal oxide, preferably selected from the group consisting of iron(III) oxide, titanium dioxide, zinc oxide, aluminum oxide, and zirconium oxide, more preferably is iron(III) oxide or aluminum oxide.

In particularly preferred embodiments, the non-conductive filler is iron (III) oxide, i.e., Fe₂O₃.

The electrically conductive curable composition may comprise at least one non-conductive filler in an amount of 2 to 20 wt.%, preferably 6 to 20 wt.%, more preferably 7 to 15 wt. %, based on the total weight of the composition.

The electrically conductive curable composition according to the present invention further comprises at least one curing catalyst (d).

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, dioctyltin dineodecanoate, dimethyltin dineodecanoate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate, di-n-octyltin dilaurate, dioctyltin dineodecanoate, dimethyltin dineodecanoate and mixtures thereof.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti (OR^{z})₄,

where R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms. Further, titanium chelate complexes can be used.

Aluminum catalysts can also be used as curing catalysts, e.g., aluminum alkoxides

Al(OR^{z})₃,

where R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups - OC(O)R^{z}. Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium. Diisopropoxyzirconium bis(ethyl acetoacetate), triisopropoxyzirconium (ethyl acetoacetate), and isopropoxyzirconium tris(ethyl acetoacetate) are used with very particular preference. Further, zirconium acylates can be used, for example. Halogenated zirconium catalysts can also be used. Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

In important embodiments, the curing catalyst is selected from tin compounds, preferably organotin compounds, more preferably selected from the group consisting of 1,3-dicarbonyl compounds of bivalent or tetravalent tin, dialyltin(IV) dicarboxylates, dialkyltin(IV) dialkoxylates, dialkyltin(IV) oxides, tin(ll) carboxylates, and mixtures thereof.

In preferred embodiments, the quantity of the curing catalyst in the curable composition described herein is from 0.01 to 5 wt.%, more preferably 0.01 to 2 wt.%, in particular 0.01 to 1 wt.%, based on the total weight of the composition. If a mixture of different catalysts is used, the amounts refer to the total amount in the composition.

The electrically conductive curable composition according to the present invention may further comprise at least one crosslinker (e).

In preferred embodiments, the crosslinker (e) is selected from a silane compound, preferably having the general formula Si(R²)ₘ(X)₄₋ₘ, wherein each R² is independently selected from an aliphatic or aromatic hydrocarbon group containing 1 to 20 C atoms, a vinyl group or a hydrogen atom; each X is independently selected from a hydroxyl group or a hydrolysable group; m is 0, 1, 2, or 3, preferably 1.

In preferred embodiments, each R² in the general formula is independently selected from an aliphatic hydrocarbon group containing 1 to 20 C atoms, more preferably from a C₁-C₁₂ alkyl, alkenyl, or alkynyl group, in particular preferably C₁-C₈ alkyl group, most preferably a methyl group.

In preferred embodiments, X is selected from a hydrolysable group, more preferably an oxime group, an alkoxy group, an acyloxy group, or an acetoxy group.

In preferred embodiments, the polyorganosiloxane (a) has at least one alkoxysilane terminal group, preferably methyldimethoxysilane terminal group, and the crosslinker (e) is a silane compound having at least one hydrolysable group X selected from an alkoxy group, preferably methoxy or ethoxy group, more preferably methoxy group. In particular, the combination of polydimethylsiloxane (a) having at least two alkoxysilane terminal groups, preferably methyldimethoxysilane terminal groups and alkylalkoxysilane, preferably methyltrimethoxysilane (component (e)), is preferred.

In preferred embodiments, the polyorganosiloxane (a) is a hydroxyl-terminated polyorganosiloxane, preferably α,ω-dihydroxyl-terminated polydiorganosiloxane, more preferably α,ω-dihydroxyl-terminated polydimethylsiloxane, and the crosslinker (e) is a silane compound having at least one hydrolysable group X selected from an alkoxy group, an oxime group, an acyloxy group, or an acetoxy group.

In preferred embodiments, the quantity of the crosslinker(e) in the curable composition described herein is from 0.1 to 10 wt.%, more preferably 0.5 to 5 wt.%, based on the total weight of the composition.

The electrically conductive curable composition according to the present invention may further comprise at least one adhesion promoter.

Suitable as adhesion promoters are, silane adhesion promoters, particularly alkoxysilanes, with a (further) functional group such as, e.g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis- (2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

In preferred embodiments, the at least one adhesion promoter is selected from aminosilanes, preferably is selected from the group consisting of 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3- aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)- propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3- trimethoxysilyl)propylamine, bis(3-triethoxysilyl)propylamin, 4-amino-3,3-dimethylbutyltrimethoxy silane and 4-amino-3,3-dimetylbuthyltriethoxy silane, and mixtures thereof, particularly preferably of 3- aminopropyltrimethoxysilane, 3-aminopropyltriethoxysilane, aminomethyltrimethoxysilane, aminomethyltriethoxysilane, 3-(N,N-dimethylamino)propyltrimethoxysilane, 3-(N,Ndimethylamino)propyltriethoxysilane, (N,N-dimethylamino)methyltrimethoxysilane, (N,Ndimethylamino)methyltriethoxysilane, 3-(N,N-diethylamino)propyltrimethoxysilane, 3-(N,Ndiethylamino)propyltriethoxysilane, (N,N-diethylamino)methyltrimethoxysilane, (N,Ndiethylamino)methyltriethoxysilane, bis(3-trimethoxysilyl)propylamine, bis(3-triethoxysilyl)propylamine, 4-amino-3,3-dimethylbutyltrimethoxy silane and 4-amino-3,3-dimetylbutyltriethoxy silane.

In preferred embodiments, the quantity of the adhesion promoter in the curable composition described herein is from 0.1 to 5 wt.%, more preferably from 0.2 to 2 wt.%, in particular from 0.5 to 2 wt.%, based on the total weight of the composition.

In preferred embodiments, the electrically conductive curable silicone composition comprises
i) at least one polyorganosiloxane (a) in an amount of from 50 to 95 % by weight, preferably 65 to 95 % by weight, more preferably 80 to 95 % by weight, based on the total weight of the composition; and/or
ii) at least one electrically conductive carbon nanostructure (CNS) or single walled carbon nanotube (SWCNT) (b) in an amount of from 0.01 to 2 % by weight, preferably 0.1 to 1.5 % by weight, more preferably 0.2 to 1.0 % by weight, based on the total weight of the composition; and/or
iii) at least one non-conductive filler (c) in an amount of from 2 to 20 % by weight, preferably 6 to 20 % by weight, more preferably 7 to 15 % by weight, based on the total weight of the composition; and/or
iv) at least one curing catalyst (d) in an amount of from 0.01 to 5 % by weight, preferably 0.01 to 2 % by weight, more preferably 0.01 to 1 % by weight, based on the total weight of the composition; and/or
v) at least one crosslinker (e) in an amount of from 0.1 to 10 % % by weight, more preferably 0.5 to 5 % by weight, based on the total weight of the composition; and/or
vi) at least one adhesion promoter in an amount of from 0.1 to 5 % by weight, preferably 0.2 to 2 % by weight, more preferably 0.5 to 2 % by weight, based on the total weight of the composition.

The electrically conductive curable composition according to the present invention may further comprise at least one adsorbing material different from the component (c) non-conductive filler.

The electrically conductive curable composition according to the present invention may further comprise any one or more additional ingredients selected from the group consisting of plasticizers, stabilizers, antioxidants, fillers, moisture scavengers, blocking agents, reactive diluents, drying agents, UV stabilizers, and rheological aids.

To increase shelf-life stability of the electrically conductive curable silicone composition, moisture scavengers may be added to remove water. Examples of the moisture scavenger include hexamethyldisilazene (HDMZ), sodium bicarbonate, sodium carbonate, calcium carbonate, magnesium oxide, or combination thereof, wherein hexamethyldisilazene is particularly preferred. Said moisture scavenger is preferably used in an amount of from 0.1 to 0.5 wt.%, based on the total weight of the electrically conductive curable silicone composition.

The electrically conductive curable composition can be a one-component or two-component composition, preferably a one-component composition.

The electrically conductive curable composition according to the invention can be obtained by mixing the above-described components, preferably by dispersing the carbon nanostructure (CNS) or single walled carbon nanotube (SWCNT) and non-conductive filler such as metal oxide within the polyorganosiloxane. This can take place in suitable dispersing units, e.g., a high-speed mixer, Three Roll Mill, High speed disperser etc. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

A cured product can be obtained from the electrically conductive curable composition according to the present invention upon exposure to moisture at room temperature. Upon curing, the composition possesses the properties of the silicone adhesive and/or sealant including good thermal resistance and flexibility along with electrical conductivity, and thus can be used as a conductive composition, such as conductive sealant/adhesive or conductive ink. The cured product exhibits a good adhesion and mechanical properties and excellent thermal resistance/stability at a high temperature up to 300°C. Thus, the cured composition can be leveraged as a high temperature stable flexible adhesive for heavy industries. The composition has been engineered in a novel way that the cured composition differs from conventional compositions in terms of performance at high temperature, maintaining flexibility at high temperature, adhesion to different metal, alloy strips and flex circuit substrates like PEEK, Polyimides, etc. at continuously high temperature.

The electrically conductive curable composition of the invention can be used as a conductive adhesive, a sealant, a coating material, and/or ink.

The following examples serve to explain the invention, but the invention is not limited thereto.

### Examples

The curable compositions presented in Tables 1 and 2 were prepared and their electrical resistance values and adhesion properties were measured at 260°C. Upon heat ageing the compositions shrink and the CNS/SWCNT particles come close to each other and hence they increase the conductivity, resulting reduction in electrical resistance values.

CNS: ATHLOS^{™} SR1200 CNS from Cabot Corporation was used.

SWCNT: TUBALL MATRIX 602 from OCSiAl was used.

Tack-free Time was determined by applying the product at a wet layer thickness of 75 µm at 23°C and a relative humidity of 50%. The coating was considered tack free when fingerprints could no longer be observed after touching the surface with a clean and dry finger. The tack-free time was measured using a timing device.

Bulk curing is the time taken for complete curing of formulation throughout the thickness (i.e., top to bottom) and it is monitored as a function of time (visual inspection) till 7 days.

Shore A Hardness was measured by ASTM D2240. Shore A hardness is a measurement that comes from a shore durometer tool. This tool is used to measure the hardness of rubber polymers and elastomers to indicate their resistance to indentation. Higher numbers on the scale mean greater hardness, while lower numbers indicate softer materials.

Viscosity of the compositions were measured by Brookfield CAP 2000 viscometer, at 25°C and 50% RH, spindle 5, 20 rpm.

Electrical resistance was measured by Keysight DAQ970A-Data acquisition system (Electrical resistance meter) to measure the electrical resistance values in Ω/ KΩ/ MΩ

**Table 1**

| **Composition** (wt.%) | C1 | E1 | E2 | E3 | E4 | E5 | E6 | C2 | E7 |
|---|---|---|---|---|---|---|---|---|---|
| dimethoxymethyl -terminated PDMS (viscosity: 45000mPas) | 88.25 | 88.05 | 88.01 | 87.9 | 87.85 | 87.45 | 87.45 | 95.76 | 93.01 |
| CNS | | 0.2 | 0.24 | 0.35 | 0.4 | 0.8 | 0.8 | 0.24 | 0.24 |
| Fe₂O₃ | 7.5 | 7.5 | 7.5 | 7.5 | 7.5 | 7.5 | 7.5 | 0 | 2.5 |
| Dispersing media | 0.5 | 0.5 | 0.5 | 0.5 | 0.5 | 0.5 | 0.5 | 0.5 | 0.5 |
| Methyl trimethoxysilane | 3 | 3 | 3 | 3 | 3 | 3 | 3 | 3 | 3 |
| Aminopropyl trimethoxysilane | 0.5 | 0.5 | 0.5 | 0.5 | 0.5 | 0.5 | 0.5 | 0.5 | 0.5 |
| dioctyltin dineodecanoate | 0.25 | 0.25 | 0.25 | 0.25 | 0.25 | 0.25 | 0.25 | 0.25 | 0.25 |
| | | | | | | | | | |
| Tack Free Time (min) | 40-50 | 40-50 | 40-50 | 40-50 | 40-50 | 40-50 | 40-50 | 40-50 | 40-50 |
| Bulk cure (days) | 7 | 7 | 7 | 7 | 7 | 7 | 7 | 7 | 7 |
| Shore A Hardness | <30 | <30 | <30 | <30 | <30 | <30 | <30 | <30 | <30 |
| Dry film thickness (microns) | 200-250 | 200-250 | 200-250 | 200-250 | 200-250 | 200-250 | 200-250 | 200-250 | 200-250 |
| Film length (cm) | 10 | 10 | 10 | 10 | 10 | 30 | 50 | 10 | 10 |
| Film width (cm) | 1 | 1 | 1 | 1 | 1 | 1 | 1 | 1 | 1 |
| Electrical Resistance | *Overload | < 3 MΩ | < 200 KΩ | < 100 KΩ | < 50 KΩ | < 50 MΩ | < 50 MΩ | < 200 KΩ | < 200 MΩ |

**Table 2**

| **Composition** (wt.%) | C3 | C4 | C5 | C6 | E8 | E9 | E10 |
|---|---|---|---|---|---|---|---|
| dimethoxymethyl- terminated PDMS (viscosity: 45000mPas) | 86.25 | 83.25 | 72.48 | 69.95 | 88.05 | 87.55 | 87.05 |
| CNS | | | | | 0.2 | 0.2 | 0.2 |
| Conductive Carbon Black (CCB) | 2 | 5 | 10.77 | 13.3 | 0.5 | 1 | 1.5 |
| Fe₂O₃ | 7.5 | 7.5 | 7.5 | 7.5 | 7.5 | 7.5 | 7.5 |
| Solvent D4 (Octamethyl tetracyclosiloxne) | | | 5 | 5 | | | |
| Dispersing media | 0.5 | 0.5 | 0.5 | 0.5 | | | |
| Methyl trimethoxysilane | 3 | 3 | 3 | 3 | 3 | 3 | 3 |
| Aminopropyl trimethoxysilane | 0.5 | 0.5 | 0.5 | 0.5 | 0.5 | 0.5 | 0.5 |
| dioctyltin dineodecanoate | 0.25 | 0.25 | 0.25 | 0.25 | 0.25 | 0.25 | 0.25 |
| | | | | | | | |
| Tack Free Time (min) | <70 | <70 | <70 | <70 | 40-50 | 40-50 | 40-50 |
| Bulk cure (days) | 7 | 7 | 7 | 7 | 7 | 7 | 7 |
| Shore A Hardness | <30 | <30 | <30 | <30 | <30 | <30 | <30 |
| Dry film thickness (microns) | 200-250 | 200-250 | 200-250 | 200-250 | 200-250 | 200-250 | 200-250 |
| Film length (cm) | 10 | 10 | 10 | 10 | 10 | 10 | 10 |
| Film width (cm) | 1 | 1 | 1 | 1 | 1 | 1 | 1 |
| Electrical Resistance | < 80 MΩ | < 50 MΩ | < 15 MΩ | < 250 KΩ | < 250 KΩ | < 200 KΩ | < 200KΩ |

**Table 3**

| **Composition** (wt.%) | C7 | E11 | E12 | E13 | E14 | E15 | C8 | E18 |
|---|---|---|---|---|---|---|---|---|
| dimethoxymethyl- terminated PDMS (viscosity: 45000mPas) | 88.25 | 86.25 | 84.25 | 82.43 | 81.25 | 79.25 | 91.75 | 89.25 |
| SWCNT (10% dispersion in vinyl PDMS) | | 2 | 4 | 6 | 7 | 9 | 4 | 4 |
| Fe₂O₃ | 7.5 | 7.5 | 7.5 | 7.5 | 7.5 | 7.5 | 0 | 2.5 |
| Dispersing media | 0.5 | 0.5 | 0.5 | 0.5 | 0.5 | 0.5 | 0.5 | 0.5 |
| Methyl trimethoxysilane | 3 | 3 | 3 | 3 | 3 | 3 | 3 | 3 |
| Aminopropyl trimethoxysilane | 0.5 | 0.5 | 0.5 | 0.5 | 0.5 | 0.5 | 0.5 | 0.5 |
| dioctyltin dineodecanoate | 0.25 | 0.25 | 0.25 | 0.25 | 0.25 | 0.25 | 0.25 | 0.25 |
| | | | | | | | | |
| Tack Free Time (min) | 40-50 | 40-50 | 40-50 | 40-50 | 40-50 | 40-50 | 40-50 | 40-50 |
| Bulk cure (days) | 7 | 7 | 7 | 7 | 7 | 7 | 7 | 7 |
| Shore A Hardness | <32 | <32 | <32 | <32 | <32 | <32 | <32 | <32 |
| Dry film thickness (microns) | 200-250 | 200-250 | 200-250 | 200-250 | 200-250 | 200-250 | 200-250 | 200-250 |
| Film length (cm) | 10 | 10 | 10 | 10 | 10 | 10 | 10 | 10 |
| Film width (cm) | 1 | 1 | 1 | 1 | 1 | 1 | 1 | 1 |
| Electrical Resistance | *Overload | > 20 MΩ | < 200 KΩ | < 100 KΩ | < 90 KΩ | < 50 KΩ | < 200 KΩ | < 200 KΩ |

The control examples C1 and C7 were without any conductive material, while the other compositions comprise various amounts of conductive CNS or SWCNT dispersed within the PDMS matrix. The compositions were moisture-cured at room temperature.

As seen in above experiments, 0.2 wt% of CNS or SWCNT in the formulations make the compositions electrically conductive. By dispersing CNS or SWCNT within the preferred range desired electrical conductivity of the composition and the electrical resistance values were obtained. Unlike conventional conductive carbon black, CNS or SWCNT is not required to load in higher quantity to achieve desired conductivity values. With very low amount of loading of CNS or SWCNT the similar set of performance could be achieved where > 10% conductive carbon black is required to load.

As seen in Table 2, if conventional electrically conductive carbon black (CCB) is used to make the silicone composition conductive, relatively higher amount of the CCB has to be dispersed into the matrix to obtain suitable electrical resistance values in lower MΩ (Mega Ohms) or KΩ (Kilo Ohms). High amount of CCB increases the viscosity of the composition abruptly and it makes it very much difficult to process the formulation, hence some organic solvent or dispersing media had to be used to manage the formulation viscosity, dispersion and for ease of applications. The compositions comprising the blend of CNS and CCB in low amounts have lower electrical resistance values in KΩ range.

## Claims

1. An electrically conductive curable composition comprising
(a) at least one polyorganosiloxane having at least one terminal group of the formula (I)
-Si(R¹)ₖ(Y)₃₋ₖ (I),
wherein
each R' is independently selected from a hydrocarbon radical containing 1 to 20 C atoms; each Y is independently selected from a hydroxy group or a hydrolysable group; and
k is 0, 1, or 2;
(b) at least one electrically conductive carbon nanostructure (CNS) or single walled carbon nanotube in an amount of 0.01 to 2 % by weight based on the total weight of the composition;
(c) at least one non-conductive filler;
(d) at least one curing catalyst; and
(e) optionally, at least one crosslinker.

2. The electrically conductive curable composition according to claim 1,
wherein:
the at least one polyorganosiloxane (a) is a polydiorganosiloxane, preferably polydimethylsiloxane; and/or
the polyorganosiloxane has at least two terminal groups of the formula (I).

3. The electrically conductive curable composition according to claim 1 or 2,
wherein
each R' is independently selected from the group consisting of an alkyl group containing 1 to 20 C atoms, an aryl group containing 6 to 20 C atoms, and an aralkyl group containing 7 to 20 C atoms, preferably selected from alkyl group containing 1 to 20 C atoms, more preferably 1 to 8 C atoms; and/or
each Y is independently selected from a hydroxyl group, an oxime group, an alkoxy group, an acyloxy group, or an acetoxy group, preferably an alkoxy group.

4. The electrically conductive curable composition according to any one of claims 1 to 3, wherein the electrically conductive carbon nanostructure (CNS) (b) is selected from the group consisting of:
carbon nanostructures or fragments of carbon nanostructures including a plurality of multiwall carbon nanotubes that are crosslinked in a polymeric structure by being branched, interdigitated, entangled and/or sharing common walls;
fractured carbon nanotubes derived from the carbon nanostructures and branched and sharing common walls with one another;
elongated CNS strands derived from the carbon nanostructures and including CNTs that have been displaced linearly with respect to one another;
dispersed CNS comprising exfoliated fractured CNTs that do not share common walls with one another; and
combinations thereof.

5. The electrically conductive curable composition according to any one of claims 1 to 4, wherein the composition comprises the electrically conductive carbon nanostructure (CNS) (b) in an amount of 0.1 to 1.5 % by weight, preferably 0.2 to 1.0 % by weight, based on the total weight of the composition.

6. The electrically conductive curable composition according to any one of claims 1 to 5, wherein the non-conductive filler (c) is a metal oxide, preferably selected from the group consisting of iron(III) oxide, titanium dioxide, zinc oxide, aluminum oxide, and zirconium oxide, more preferably is iron(III) oxide or aluminum oxide.

7. The electrically conductive curable composition according to any one of claims 1 to 6, wherein the composition comprises the non-conductive filler (c) in an amount of 2 to 20 wt.%, preferably 6 to 20 wt.%, more preferably 7 to 15 wt.%, based on the total weight of the composition.

8. The electrically conductive curable composition according to any one of claims 1 to 7, the composition further comprises at least one additional electrically conductive filler, which is different from the carbon nanostructure (CNS) (b), up to 9 wt.%, preferably from 0.1 to 7 wt.%, more preferably from 0.1 to 3 wt.%, based on the total weight of the composition, provided that the sum of the electrically conductive carbon nanostructure (CNS) (b) and the additional electrically conductive filler is less than 10 wt.%, preferably less than 9 wt.%, more preferably less than 5 wt.%, in particular less than 4 wt.%.

9. The electrically conductive curable composition according to any one of claims 1 to 8, wherein the crosslinker (e) is selected from a silane compound having the general formula Si(R²)ₘ(X)₄₋ₘ,
wherein
each R² is independently selected from an aliphatic or aromatic hydrocarbon group containing 1 to 20 C atoms, a vinyl group or a hydrogen atom;
each X is independently selected from a hydroxyl group or a hydrolysable group, preferably selected from an oxime group, an alkoxy group, an acyloxy group, or an acetoxy group; and m is 0, 1, 2, or 3, preferably 1.

10. The electrically conductive curable composition according to any one of claims 1 to 9,
wherein:
the polyorganosiloxane (a) has at least one alkoxysilane terminal group, preferably methyldimethoxysilane terminal group, and the crosslinker (e) is a silane compound having at least one hydrolysable group X selected from an alkoxy group, preferably methoxy or ethoxy group, more preferably methoxy group; or
the polyorganosiloxane (a) is a hydroxyl-terminated polyorganosiloxane, preferably α,ω-dihydroxyl-terminated polydiorganosiloxane, more preferably α,ω-dihydroxyl-terminated polydimethylsiloxane, and the crosslinker (e) is a silane compound having at least one hydrolysable group X selected from an alkoxy group, an oxime group, an acyloxy group, or an acetoxy group.

11. A cured product of the electrically conductive curable composition according to any one of claims 1 to 10.

12. An adhesive, sealant, coating, and/or ink material comprising the electrically conductive curable composition according to any one of claims 1 to 10.

13. Use of the electrically conductive curable composition according to any one of claims 1 to 10 as an adhesive, a sealant, a coating, and/or an ink material.
